# EUROPÄISCHE PATENTSCHRIFT

(11) **EP 0 636 751 B1**
(45) Veröffentlichungstag und Bekanntmachung des Hinweises auf die Patenterteilung: **14.10.1998**
(21) Anmeldenummer: 94111816.8
(22) Anmeldetag: 28.07.1994
(51) Int. Cl.: E03F 5/14, E03F 5/10, B01D 35/10, B01D 33/067

(54) **Vorrichtung zur Rückhaltung von im Wasser mitgeführten Feststoffen an Überläufen von Regenentlastungsanlagen**
Device for detaining solids carried by water at the discharge overflow of rainwater sewage systems
Dispositif de retenue des matières solides entraînées par l'eau aux déversoirs des installations de décharge des eaux pluviales

(30) Priorität: 30.07.1993 DE 4325584
(43) Veröffentlichungstag der Anmeldung: 01.02.1995
(73) Patentinhaber: Giehl, Klaus Ulrich, Dipl.-Ing. (FH), D-57629 Heimborn (DE)
(72) Erfinder: Giehl, Klaus Ulrich, Dipl.-Ing. (FH), D-57629 Heimborn (DE)
(74) Vertreter: Quermann, Helmut, Dipl.-Ing.

(56) Entgegenhaltungen:
- WO-A-90/13238
- CH-A- 681 358
- DE-U- 9 014 740
- FR-A- 2 637 822

## Beschreibung

Die Erfindung betrifft eine Vorrichtung, die am Überlauf einer Regenentlastungsanlage angeordnet wird und zur Rückhaltung von Feststoffen aus dem abgeschlagenen Überlaufwasser dient.

Tritt der Überlauf an einer Regenentlastungsanlage in Funktion, so werden neben den im Abwasser befindlichen feinen und gelösten Schmutzpartikeln auch gröbere Feststoffe, insbesondere Schwimmstoffe, wie Papier, Fäkalien, Holz, Kunststoffe etc., mit ausgetragen, die in dem Gewässer, in welches entlastet wird, zu erheblichen Verunreinigungen führen.

Besonders diese gröberen Schwimmstoffe, wie Papier, Kunststoffe etc., verschmutzen das Gewässer nachhaltig und besonders in visueller Hinsicht, weil sich diese Teile an der Ufervegetation und sonstigen im Gewässer befindlichen Hindernissen festhängen. Die Gewässer von diesem ständig anfallenden Unrat ständig zu säubern ist sehr aufwendig und in der Regel praktisch überhaupt nicht durchführbar.

Durch den bei Regenentlastungsanlagen überwiegend praktizierten Einbau von Tauchwänden vor der Überfallschwelle gelingt es nur zum Teil, den Austrag von Schwimm- und/oder Schwebstoffen zu verhindern.

Es ist weiterhin bekannt, die Schwimm- und Schwebstoffe durch Rechen, Siebe o.ä. am Überlauf der Regenentlastungsanlage zurückzuhalten. Derartige Einrichtungen sind jedoch wartungsintensiv, weil sie sich schnell zusetzen und, wenn solche Vorrichtungen mit einer maschinellen Reinigung ausgestattet sind, technisch sehr aufwendig.

Aus der DE-PS 28 56 861 ist eine Vorrichtung zum Austragen von Feststoffen aus Abwässern, die durch einen Strömungskanal hindurchströmen, bekannt. Die Vorrichtung ist als Rechen ausgebildet, bei dem mehrere scheibenförmige, vom Abwasser durchströmte Fangelemente in Art scheibenförmiger Bürsten vorgesehen sind, wobei die Bürsten mit geringem Seiten- und Bodenspiel in die Flüssigkeit im Strömungskanal eintauchen. Mit dem bekannten Rechen werden die im Wasser mitgeführten Feststoffe aus diesem entfernt und einem externen Auffangbehälter zugeführt, somit dauerhaft von der Flüssigkeit abgetrennt.

Aus der CH-A-681 358 ist ein Verfahren zum Trennen und Fördern von Verunreinigungen aus Mischwassern, bei dem die Trennung über eine Förderspirale vorgenommen wird, bekannt. Dort wird das Mischwasser über Lochbleche filtriert. Die Feststoffe werden mit der Spirale in das Ursprungsbecken zurückgefördert. Die Förderspirale ist in einen Trog eingebettet, der mit den Lochblechen ausgerüstet und mit dem Ursprungsbecken verbunden ist. Es erfolgt damit eine passive Bearbeitung, das heißt Siebung, mit einer nachträglichen Reinigung durch die Förderspirale. Verunreinigungen, die sich vor das Lochblech legen, können zerkleinert und durch das Sieb durchgedrückt werden.

Der vorliegenden Erfindung liegt die Aufgabe zugrunde, eine Vorrichtung zu schaffen, mit der die Feststoffe, insbesondere Schwimmstoffe, aus dem Überlaufwasser auf eine einfache und betriebssichere Art an der Überfallschwelle zurückgehalten werden, die zudem an bestehenden Entlastungsanlagen leicht nachgerüstet werden kann.

Zur Lösung dieser Aufgabe schlägt die Erfindung eine Vorrichtung zur Rückhaltung von im Wasser mitgeführten Feststoffen an Überläufen von Regenentlastungsanlagen vor, mit einer im Bereich einer Überfallschwelle und parallel zu dieser angeordneten antreibbaren Welle, die mit Fangelementen bestückt ist, wobei die unteren Fangelemente bei Rotation der Welle entgegen der Fließrichtung des Überlaufwassers durch dieses bewegt werden, ferner mit einer vor und parallel zur Welle angeordneten Auffangwanne zur Aufnahme der Feststoffe, wobei die Auffangwanne hydraulisch mit dem Abwasserstrom zur Kläranlage verbunden ist.

Eine derartige Vorrichtung ist einfach in ihrer Konstruktion, sie kann sowohl selbsttätig als auch mit Fremdenergie betrieben werden. Ferner werden die Schmutzstoffe von selbst in den zur Kläranlage führenden Abwasserstrom zurückgeführt. Die Vorrichtung ist weitgehend wartungsfrei und kann selbst bei den vielfältigsten Feststoff- bzw. Schwimmstoffgegenständen nicht blockieren. Im übrigen kann die Vorrichtung an bestehenden Entlastungsanlagen in der Regel ohne Umbaumaßnahmen am Bauwerk nachgerüstet werden.

Bei der erfindungsgemäßen Vorrichtung halten die Fangelemente die im Wasser mitgeführten Feststoffe zurück und überführen diese zur Auffangwanne, von der sie in den zur Kläranlage fließenden Abwasserstrom gelangen.

Die vorgenannte grundsätzliche Gestaltung der erfindungsgemäßen Vorrichtung zur Rückhaltung von im Wasser mitgeführten Feststoffen an Überläufen von Regenentlastungsanlagen läßt die unterschiedlichsten Ausgestaltungen zu:

So wird es als bevorzugt angesehen, wenn die die Fangelemente aufnehmende Welle vor oder über der Überlaufschwelle angeordnet ist. Es ist grundsätzlich auch denkbar, die Welle hinter der Überlaufschwelle anzuordnen. Beide Varianten ermöglichen ein sicheres Zurückhalten der Feststoffe im Bereich der Fangelemente und deren Überführen in die Auffangwanne. Die Welle selbst kann auf unterschiedliche Art und Weise angetrieben werden, beispielsweise mit Motorkraft oder durch die Strömungsenergie des abfließenden Überlaufwassers.

Eine besondere Gestaltung der erfindungsgemäßen Vorrichtung sieht vor, daß vor und parallel zur Welle hier zusätzlich eine Tauchwand angeordnet ist, die dafür Sorge trägt, daß bereits ein Großteil der Schwimmstoffe zurückgehalten wird. In diesem Zusammenhang wird es als besonders zweckmäßig angesehen, wenn in die Tauchwand die Auffangwanne integriert ist, die vorzugsweise im unteren Bereich der Tauchwand angeordnet ist.

Um sicherzustellen, daß die in der Auffangwanne befindlichen Feststoffe sicher dem Abwasserstrom zur Kläranlage zugeführt werden, sieht eine Weiterbildung der Erfindung vor, daß die Auffangwanne durch den Zufluß von Abwasser oder mit Hilfe einer Spülvorrichtung spülbar ist. In diesem Zusammenhang weist die Auffangwanne vorzugsweise ein Gefälle in Längsrichtung auf. Es ist allerdings auch denkbar, die Auffangwanne unten mit einer Klappe oder einem Wandungsabschnitt zum Ausgeben der Feststoffe in den Abwasserstrom auszugestalten. Diese Klappe bzw. dieser Wandungsabschnitt kann beispielsweise mittels eines Schwimmers in die angehobene Stellung zum Verschließen der Auffangwanne überführbar sein.

Die Fangelemente selbst sind bevorzugt als Borsten ausgebildet, mit denen die Welle bestückt ist. Die Borsten können flexibel sein. Im Fall flexibler Borsten können diese zusätzlich an ihren freien Enden mit Ballastkörpern versehen sein, um zu verhindern, daß sie vor der Überfallschwelle nicht von der Strömung des abfließenden Überlaufwassers weggedrückt werden.

Weitere Merkmale der Erfindung sind in den Unteransprüchen, der Beschreibung der Figuren und in den Figuren selbst dargestellt, wobei bemerkt wird, daß alle Einzelmerkmale und Kombinationen von Einzelmerkmalen erfindungswesentlich sind.

In den Figuren ist die Erfindung anhand mehrerer Ausführungsformen beispielsweise dargestellt, ohne auf diese beschränkt zu sein. Es zeigt:
- Figur 1: einen Horizontalschnitt an einer Regenentlastungsanlage mit der erfindungsgemäßen Vorrichtung,
- Figur 2: einen Längsschnitt quer zur Überfallschwelle der Regenentlastungsanlage,
- Figuren 3 bis 6: unterschiedliche Gestaltungen einer Auffangwanne,
- Figur 7: einen Schnitt quer zur Überlaufschwelle bei einer modifizierten Ausführungsform.

Bei der gezeigten Regenentlastungsanlage 11 tritt das Abwasser über einen Kanal 12 in Strömungsrichtung gemäß Pfeil A in das eigentliche Regenentlastungsbauwerk 13 ein und gelangt von dort über eine nur strichliert dargestellte Kanalöffnung 14 in ein nachfolgendes Aufnahmebecken 15 mit Sohlrinne 16 und strömt in Richtung des Pfeiles B zur Kläranlage. Im Falle der Regenentlastung tritt Wasser durch eine seitliche Öffnung in Fließrichtung gemäß dem Pfeil C aus dem Regenentlastungsbauwerk 13 aus.

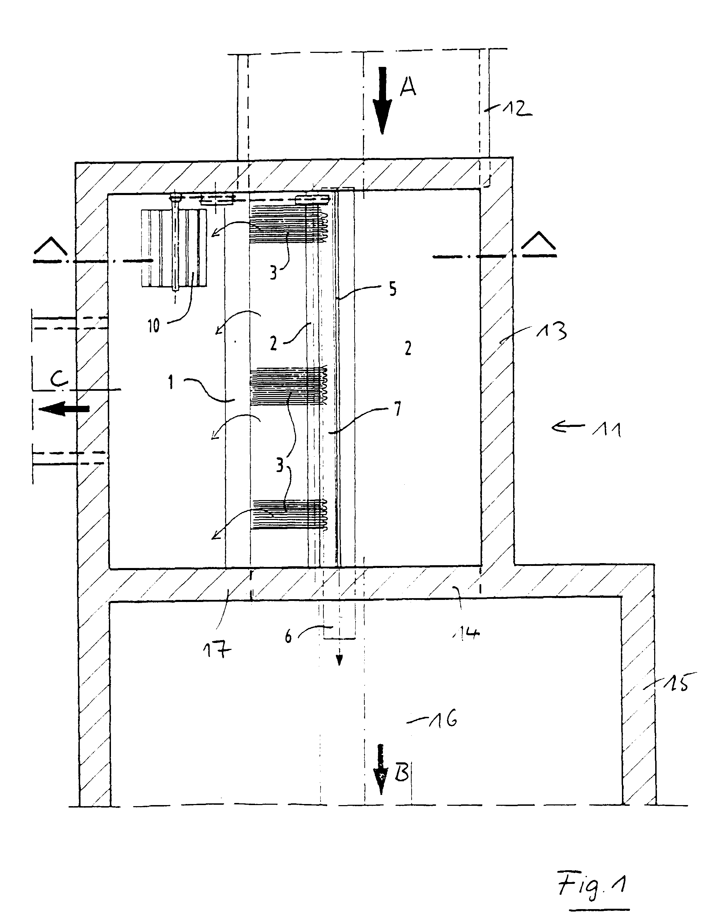

Die Figuren 1 und 2 verdeutlichen, daß vor der Überfallschwelle 1 eine parallel zu dieser drehbar gelagerte Welle 2 angeordnet ist, die mit flexiblen Borsten 3 bestückt ist. Die Welle 2 dreht sich bei Betrieb gegen die Strömung des abfließenden Überlaufwassers. Die Drehung der Welle 2 kann beispielsweise mit Hilfe eines Motors oder über ein durch die überlaufende Wassermenge betriebenes Wasserrad 10, eine Turbine o.ä. bewirkt werden.

Vor der Überfallschwelle 1 ist weiterhin eine Tauchwand 5 angeordnet, die unten als Auffangwanne 6 ausgebildet ist. Die Auffangwanne 6 durchsetzt die kanalseitige Wandung 17 des Regenentlastungsbauwerkes 13 und mündet im Bereich der Sohlwelle 16, oberhalb dieser in das Aufnahmebecken 15.

Tritt der Überlauf in Funktion, dann durchströmt das Überlaufwasser die von der Welle 2 ausgehenden Borsten 3. Die Borsten 3 sind derartig angeordnet, daß sich die Schwimmstoffe in den Borsten 3 verfangen und so zurückgehalten werden.

Zwischen der Welle 2 und der Tauchwand 5 ist ein vorzugsweise kammartiger Abstreifer 7 angeordnet. Durch Drehbewegung der Welle 2 werden die Borsten 3 mit Hilfe des Abstreifers 7 ausgekämmt bzw. von den Schwimmstoffen befreit.

Die vorzugsweise aus flexiblem Material hergestellten Borsten 3 verformen sich im Bereich des Abstreifers 7 zu einem Borstenbündel, welches gegen das aufsteigende Wasser ein verhältnismäßig dichtes Medium bildet. Durch diese Dichtigkeit wird eine im Bereich des Abstreifers 7 nach oben zum Überlauf gerichtete Strömung stark vermindert, so daß die abgestreiften Feststoffe nach unten absinken können und nicht von der Strömung wieder mit nach oben gezogen werden.

Die abgestreiften Feststoffe gelangen so in die Auffangwanne 6 bzw. beharren in einem Bereich unterhalb des Abstreifers 7, wo das Abwasser nicht das Bestreben hat, zum Überlauf zu strömen. infolge der vorzugsweise mit Gefälle hergestellten Auffangwanne 6 fließen die Feststoffe dann nach Ende des Regenereignisses dem zur Kläranlage weiterführenden Abwasserstrom wieder zu. Gegebenenfalls können die Feststoffe auch mit Hilfe einer Reinigungseinrichtung, z.B. einer Spülvorrichtung aus der Auffangwanne 6 ausgeschwemmt werden.

In einer weiteren Ausgestaltung der Erfindung wird die Wandung 8 der Auffangwanne 6, gegebenenfalls in Verbindung mit der Ausbildung der Überfallkrone 9, derart geformt, daß entsprechende Strömungsrichtungen im Bereich der erfindungsgemäßen Vorrichtung erzeugt werden.

Damit die flexiblen Borsten 3 vor der Überfallschwelle 1 nicht von der Strömung des abfließenden Überlaufwassers weggedrückt werden, sind die Spitzen der Borsten 3 mit einem Ballastteil, vorzugsweise einem Metallstück 4, versehen, durch welches die Borsten 3 der Gegenströmung mit Hilfe der Schwerkraft entgegenwirken und wie eine Bürste das Wasser durchkämmen, so daß sich die Fest-/Schwimmstoffe an den Borsten 3 verfangen.

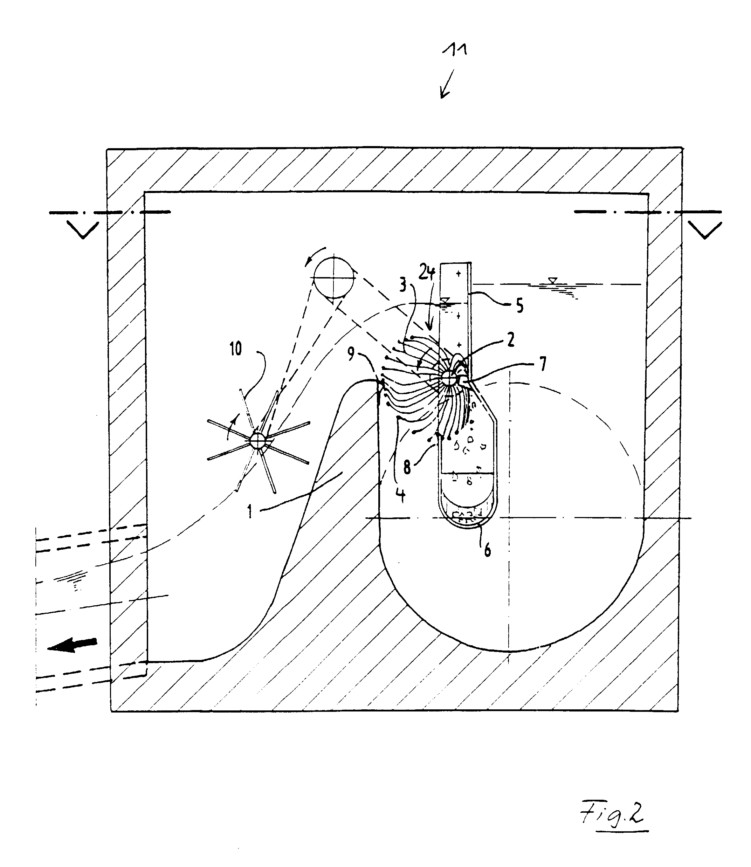

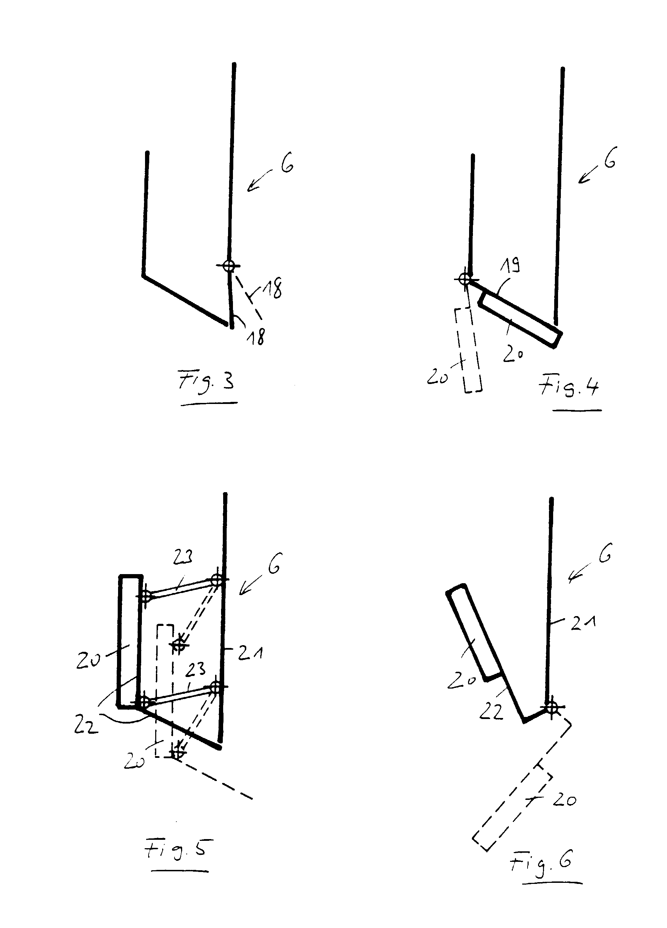

Die Figuren 3 bis 6 verdeutlichen eine alternative Gestaltung der Auffangwanne 6, die es ermöglicht, die von dieser aufgenommenen Feststoffe unmittelbar nach unten in das Regenentlastungsbauwerk 13 auszugeben. Bei der Ausführungsform nach Figur 3 ist der vertikale untere Endbereich der Auffangwanne 6 als oben angelenkte Klappe 18 ausgebildet, die bei Überlauf strömungsbedingt in ihre Schließstellung gedrückt wird. Ist nach dem Regenereignis der Wasserstand im Regenentlastungsbauwerk 13 wieder gesunken, bewirkt die Gewichtskraft der in der Auffangwanne befindlichen Feststoffe das Öffnen der Klappe 18, womit die Feststoffe aus der Auffangwanne herausfallen. Bei der Ausführungsform nach Figur 4 weist die Auffangwanne 6 einen schwenkbar angelenkten Bodenabschnitt 19 auf, dessen Unterseite mit einem Schwimmer 20 versehen Ist. Bei Überlauf mit dem Flüssigkeitseinstau im Regenentlastungsbauwerk 13 bewirkt der Schwimmer 20 ein Aufschwimmen des Bodenabschnittes 19, womit die Auffangwanne 6 geschlossen wird und die Feststoffe von der Auffangwanne 6 aufgenommen werden können. Mit absinkendem Wasserspiegel im Regenentlastungsbauwerk 13 folgt der Schwimmer 20 der Wasserspiegeländerung, womit der Bodenabschnitt 13 verschwenkt und die Feststoffe aus der Auffangwanne 6 herausfallen. Bei der Ausführungsform nach Figur 5 sind gegenüberliegende Wandungsabschnitte 21 und 22 der Auffangwanne 6 mittels eines Parallelgestänges 23 relativ zueinander beweglich, wobei am beweglichen Wandungsabschnitt 22 der Schwimmer 20 befestigt ist. Auch die Ausführungsform nach der Figur 6 arbeitet unter Einwirkung eines Schwimmers 20. Bei dieser ist der bewegliche Wandungsabschnitt 22 schwenkbar am feststehenden Wandungsabschnitt 21 angelenkt und am Wandungsabschnitt 22 der Schwimmer 20 befestigt. Mit strichlierten Linien ist in der Darstellung der Figuren 3 bis 6 die Öffnungsstellung der Auffangwanne 6 verdeutlicht.

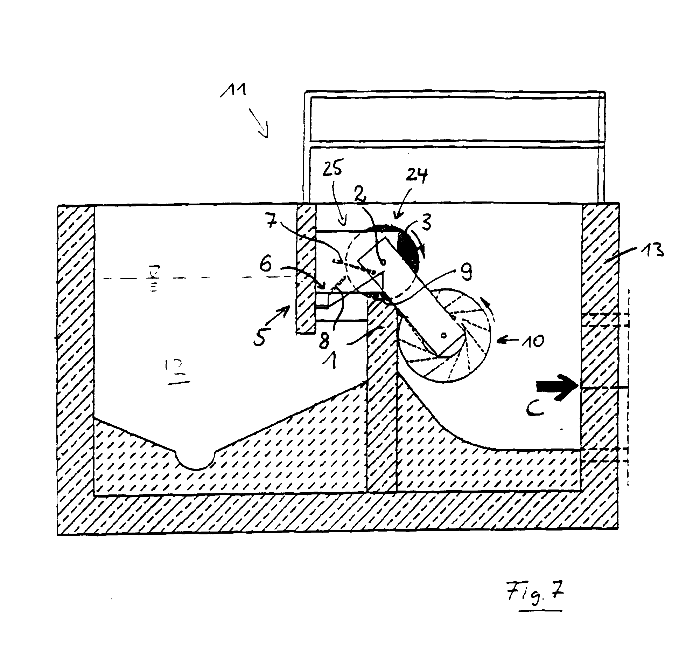

Bei der in der Figur 7 gezeigten modifizierten Gestaltung des Regenentlastungsbauwerkes 13 sind mit der Ausführungsform nach der Figur 2 übereinstimmende Teile der Einfachheit halber mit denselben Bezugsziffern bezeichnet.

Bei der in Figur 7 gezeigten Ausführungsform ist die Welle 2 oberhalb der Überfallkrone 9 der Überfallschwelle 1 angeordnet und es sind die Borsten 3 der Bürste 24 relativ steif ausgebildet, so daß sie nur dann gebogen werden, wenn sie bei der Rotation der Bürste 24 die Überfallkrone kontaktieren. Bei dieser Ausführungsform ist die Auffangwanne 6 nicht in die Tauchwand 5 integriert, sondern es ist an dieser ein Lagerrahmen 25 befestigt, der in seinem unteren Bereich die Auffangwanne 6 und die Abstreifvorrichtung 7 aufnimmt. Diese kann kammartig oder borstenartig ausgebildet sein. Im letztgenannten Fall streifen die Borsten des Abstreifvorrichtung 7 die an den Borsten 3 der Bürste 24 zurückgehaltenen Feststoffe ab. Der Lagerrahmen 25 dient ferner der Lagerung der Welle 2 mit der Bürste 24 und des Wasserrades 10. Die Drehrichtungen von Bürste 24 und Wasserrad 10 sind durch Pfeile verdeutlicht.

Bei einem erhöhten Wasserstand in Kanal 12 tritt Wasser über die Überlaufschwelle 1 in den dem Wasserrad 10 zugewandten Bereich des Regenentlastungsbauwerkes 13 über, wobei die Schwimm- und Schwebstoffe im Bereich der Überfallkrone 9 von den in diesem Bereich befindlichen Borsten 3 der angetriebenen Bürste 24 zurückgehalten und aufgrund der Drehbewegung der Bürste 24 im Uhrzeigersinn in Richtung des Abstreifers 7 mitgenommen werden. Der kammartige, nahezu bis zur Welle 2 reichende und außen aus der Bürste 24 austretende Abstreifer 7 streift die von der Bürste 24 mitgenommenen Feststoffe ab, die infolgedessen in die Auffangwanne 6 fallen und von dort, sobald keine Regenentlastung mehr stattfindet, den Kanal 12 wieder zugeführt werden. Die Entleerung der Auffangwanne 6 kann dabei, wie vorstehend aufgezeigt, erfolgen.

## Patentansprüche

1. Vorrichtung zur Rückhaltung von im Wasser mitgeführten Feststoffen an Überläufen von Regenentlastungsanlagen (11), mit einer im Bereich einer Überfallschwelle (1) und parallel zu dieser angeordneten antreibbaren Welle (2), die mit Fangelementen (3) bestückt ist, wobei die unteren Fangelemente (3) bei Rotation der Welle (2) entgegen der Fließrichtung des Überlaufwassers durch dieses bewegt werden, ferner mit einer vor und parallel zur Welle (2) angeordneten Auffangwanne (6) zur Aufnahme der Feststoffe, wobei die Auffangwanne (6) hydraulisch mit dem Abwasserstrom zur Kläranlage verbunden ist.

2. Vorrichtung nach Anspruch 1, wobei die Welle (2) vor, über oder hinter der Überlaufschwelle (1) angeordnet ist.

3. Vorrichtung nach Anspruch 1 oder 2, wobei die Fangelemente als Borsten (3) ausgebildet sind, mit denen die Welle (2) bestückt ist.

4. Vorrichtung nach Anspruch 3, wobei die an der Welle (2) angeordneten Ecrsten (3) flexibel sind.

5. Vorrichtung nach Anspruch 4, wobei die flexiblen Borsten (3) an ihrem freien Ende einen Ballastkörper (4) aufweisen.

6. Vorrichtung nach einem der Ansprüche 1 bis 5, wobei die Welle (2) mit Motorkraft oder durch die Strömungsenergie des abfließenden Überlaufwassers angetrieben wird.

7. Vorrichtung nach einem der Ansprüche 1 bis 6, wobei vor und parallel zur Welle (2) eine Tauchwand (5) angeordnet ist.

8. Vorrichtung nach Anspruch 7, wobei in die Tauchwand (5) die Auffangwanne (6) integriert ist.

9. Vorrichtung nach Anspruch 8, wobei die Tauchwand (5) im unteren Bereich die Auffangwanne (6) aufweist.

10. Vorrichtung nach einem der Ansprüche 1 bis 9, wobei die Auffangwanne (6) durch den Zufluß von Abwasser oder mit Hilfe einer Spülvorrichtung spülbar ist.

11. Vorrichtung nach einem der Ansprüche 1 bis 10, wobei die Auffangwanne (6) in Längsrichtung ein Gefälle aufweist.

12. Vorrichtung nach einem der Ansprüche 1 bis 11, wobei die Wandung (8) der Auffangwanne (6) als Strömungsleiteinrichtung ausgebildet ist.

13. Vorrichtung nach einem der Ansprüche 1 bis 12, wobei die Auffangwanne (6) mit einer Klappe (19) oder einem beweglichen Wandungsabschnitt (22) zum Ausgeben der Feststoffe in den Abwasserstrom versehen ist.

14. Vorrichtung nach Anspruch 13, wobei die Klappe (18) oder der Wandungsabschnitt (22) mittels eines Schwimmers (20) in die Schließstellung der Auffangwanne (6) überführbar ist.

## Claims

1. A device for retaining solids entrained in water at overflows of rainwater discharge installations (11), having a shaft (2) which can be driven, which is equipped with collecting elements (3) and which is disposed in the region of an overflow barrier (1) and parallel thereto, wherein when the shaft (2) rotates in the opposite direction to the direction of flow of the overflow water the lower collecting elements (3) are moved through the overflow water, and having in addition a catchment trough (6) for receiving the solids, which is disposed in front of and parallel to the shaft (2), wherein the catchment trough (6) is hydraulically connected to the flow of waste water to the sewage works.

2. A device according to claim 1, wherein the shaft (2) is disposed in front of, above or behind the overflow barrier (1).

3. A device according to claim 1 or 2, wherein the collecting elements are constructed as bristles (3) with which the shaft (2) is covered.

4. A device according to claim 3, wherein the bristles (3) disposed on the shaft (2) are flexible.

5. A device according to claim 4, wherein the flexible bristles (3) have a ballast body (4) at their free ends.

6. A device according to any one of claims 1 to 5, wherein the shaft (2) is driven by motor power or by the energy of flow of the discharging overflow water.

7. A device according to any one of claims 1 to 6, wherein a downflow baffle (5) is disposed in front of and parallel to the shaft (2).

8. A device according to claim 7, wherein the catchment trough (6) is integrated in the downflow baffle (5).

9. A device according to claim 8, wherein the downflow baffle (5) comprises the catchment trough (6) in its lower region.

10. A device according to any one of claims 1 to 9, wherein the catchment trough (6) can be flushed by the inflow of waste water or with the aid of a flushing device.

11. A device according to any one of claims 1 to 10, wherein the catchment trough (6) has a descending gradient in the longitudinal direction.

12. A device according to any one of claims 1 to 11, wherein the wall (8) of the catchment trough (6) is constructed as a flow guidance device.

13. A device according to any one of claims 1 to 12, wherein the catchment trough (6) is provided with a flap (19) or a movable wall section for discharging the solids into the waste water stream.

14. A device according to claim 13, wherein the flap (18) or the wall section (22) can be moved into the closed position of the catchment trough (6) by means of a float (20).

## Revendications

1. Dispositif de retenue des matières solides entraînées par l'eau aux déversoirs des installations (11) de décharge des eaux pluviales,
caractérisé en ce qu'
il comprend dans la zone d'un seuil de déversoir (1) et parallèlement à celui-ci, un arbre (2) pouvant être entraîné et portant des organes de saisie (3) qui, lorsqu'ils se trouvent en bas pendant la rotation de l'arbre (2) se déplacent dans l'eau de décharge en sens contraire de l'écoulement de celle-ci, tandis qu'une auge collectrice (6) des matières solides, disposée devant l'arbre (2) et parallèlement à lui, est en liaison hydraulique avec le courant de sortie conduisant à l'installation de clarification.

2. Dispositif selon la revendication 1,
caractérisé en ce que
l'arbre (2) se trouve devant, au-dessus ou derrière le seuil (1) du réservoir.

3. Dispositif selon la revendication 1 ou 2,
caractérisé en ce que
les organes de saisie sont constitués par des brosses (3) dont l'arbre (2) est garni.

4. Dispositif selon la revendication 3,
caractérisé en ce que
les brosses (3), montées sur l'arbre, sont flexibles.

5. Dispositif selon la revendication 4,
caractérisé en ce que
les brosses flexibles (3) portent des corps de lestage (4) à leurs extrémités libres.

6. Dispositif selon l'une quelconque des revendications 1 à 5,
caractérisé en ce que
l'arbre (2) est entraîné par un moteur ou par l'énergie du courant de l'eau passant sur le déversoir.

7. Dispositif selon l'une quelconque des revendications 1 à 6,
caractérisé en ce qu'
une paroi immergée (5) est placée devant l'arbre (2) et parallèlement à lui.

8. Dispositif selon la revendication 7,
caractérisé en ce que
la paroi immergée (5) est intégrée à l'auge collectrice (6).

9. Dispositif selon la revendication 8,
caractérisé en ce que
la paroi immergée (5) comporte, à sa partie inférieure, l'auge collectrice (6).

10. Dispositif selon l'une des revendications 1 à 9,
caractérisé en ce que
l'auge collectrice (6) peut être rincée par envoi d'eau de sortie ou par l'intermédiaire d'un dispositif de rinçage.

11. Dispositif selon l'une des revendications 1 à 10,
caractérisé en ce que
l'auge collectrice (6) présente, en direction longitudinale, une pente.

12. Dispositif selon l'une des revendications 1 à 11,
caractérisé en ce que
la paroi (8) de l'auge collectrice (6) est conçue comme un dispositif directeur d'écoulement.

13. Dispositif selon l'une des revendications 1 à 12, caractérisé en ce que
l'auge collectrice (6) est équipée d'un clapet (19) ou d'une partie de paroi (22) mobile, pour faire passer les matières solides dans le courant de sortie.

14. Dispositif selon la revendication 13,
caractérisé en ce que
le clapet (18) ou la partie de cloison (22) peut, par l'intermédiaire d'un flotteur (20), être amenée en position de fermeture de l'auge collectrice (6)
